Europäisches Patentamt

European Patent Office

Office européen des brevets

(11) Publication number: **0 229 194**
**B1**

(12) **EUROPEAN PATENT SPECIFICATION**

(45) Date of publication of patent specification: **01.08.90**

(21) Application number: **85114657.1**

(22) Date of filing: **18.11.85**

(51) Int. Cl.⁵: **B 23 K 26/06,** G 02 B 26/04, H 01 S 3/121

(54) Laser beam processing apparatus.

(43) Date of publication of application:
**22.07.87 Bulletin 87/30**

(45) Publication of the grant of the patent:
**01.08.90 Bulletin 90/31**

(84) Designated Contracting States:
**DE FR GB**

(56) References cited:
FR-A-2 259 375
GB-A-2 032 325
GB-A-2 074 341
US-A-4 519 680

PATENTS ABSTRACTS OF JAPAN, vol. 9, no. 252 (M-420) 1975r, 9th October 1985; & JP-A-60 102 287 (MATSUSHITA DENKI SANGYO K.K.) 06-06-1985 (Cat. A) * Whole document *

INSTRUMENTS AND EXPERIMENTAL TECHNIQUES, vol. 15, no. 4II, July-August 1972, pages 1194-1196, New York, US; M.G. ZUEV et al.: "Stable opticomechanical modulator for modulating"

(73) Proprietor: **Matsushita Electric Industrial Co., Ltd.**
**1006, Oaza Kadoma**
**Kadoma-shi Osaka-fu, 571 (JP)**

(72) Inventor: **Masaki, Takeshi**
**5546, Mita 4-chome Tama-ku**
**Kawasaki City, 214 (JP)**
Inventor: **Kawata, Koichi**
**6-18, Nagayama 6-chome**
**Tama City, 206 (JP)**
Inventor: **Sakagaito, Yukuo**
**4-25, Tachibanadai 2-chome Midori-ku**
**Yokohama City, 227 (JP)**
Inventor: **Yamaguchi, Katsumasa**
**3039-18, Sugao Miyamae-ku**
**Kawasaki City, 213 (JP)**
Inventor: **Kinoshiro, Hiromichi** No. 302, Raionzu-manshon
**Myorenji Dai-3 187-9, Ohguchi-nakamachi Kanagawa-ku Yokohama-City 221 (JP)**
Inventor: **Toba, Hiroto**
**1114, Kamisugata-cho Hodogaya-ku Yokohama City, 240 (JP)**

(74) Representative: **Patentanwälte Kirschner & Grosse**
**Forstenrieder Allee 59**
**D-8000 München 71 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates generally to a laser beam processing apparatus, and particularly concerns a laser beam processing apparatus capable of processing at a plurality of work stations.

A laser beam processing apparatus for processing, for instance, cutting, drilling, welding, engraving, or heat processing of a work comprises a laser oscillator and an optical system for directing a laser beam and focusing the laser beam on a work spot.

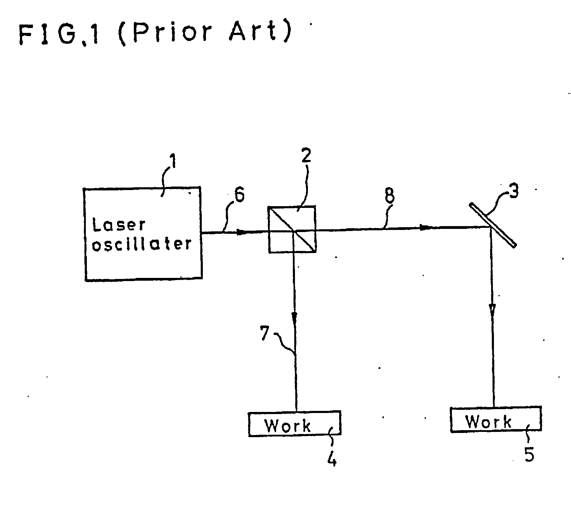

When introducing the laser beam processing apparatus for an actual manufacturing system, there is a possibility of constructing the apparatus to enable the above-mentioned processing at plurality of work stations. In order to enable the above-mentioned requirement, there has been a laser beam processing apparatus comprising one laser oscillator with a high power output, beam-splitters for dividing an output laser beam of the laser oscillator into plurality of laser beams and a plurality of wave-guides for directing the divided laser beams to the plurality of work stations, and focusing devices to focus the guided laser beams onto works. One example of the conventional laser beam processing apparatus having the beam-splitter is elucidated with reference to Fig. 1.

A laser oscillator 1 oscillates and issues a laser beam 6 which is divided into two laser beams 7 and 8 by a beam-splitter 2, and the beam 7 irradiates a work 4 at a first work station, and the other laser beam 8 irradiates, after reflection by a mirror 3, another work 5 at another work station. The above-mentioned laser processing apparatus utilizing the conventional beam-splitter 2 has the following problem. In the first place, the output powers of the divided laser beams 7 and 8 are fixed to a certain value of power, for instance, each about 50 W when the output laser beam 6 has a power of 100 W. That is, the ratio between the powers of two divided laser beams can not be changed as desired, and therefore even when switching of the output power is desired, it is not easy to make such power adjustment. Furthermore, a laser having a considerably large output, which is larger than the total of the powers used in the work stations, has been necessary. And furthermore, since there is a light energy loss in the beam-splitter 2, a half-mirror in the beam-splitter 2 is subjected to considerable damage when the output power of the laser beam 6 from the laser oscillator 1 is high.

From JP—A—60-102287, a laser working machine is known to perform different workings at a plurality of work stations. The production efficiency is improved by detecting the window parts and mirror parts of at least one rotary chopper mirror provided on the optical axis of the laser light beam and controlling the oscillation of a laser oscillator. This machine has one ordinary mirror for reflecting a light beam passing through the rotary chopper mirror to a work.

From GB—A—2074341 a rotating mirror beam combiner or splitter is known which comprises a rotor supporting a plurality of individual mirrors arranged in a plurality of axially spaced parallel planes perpendicular to the rotor, one plane for each of five input beams. The incident beams are pulsed successively in synchronism with the rotation of the mirrors. The rotor with the individual mirrors serves as a splitter splitting up an incident laser beam into a plurality of output laser beams.

The purpose of the present invention is to provide a laser beam processing apparatus wherein the above-mentioned shortcomings are solved, and plural laser beams are taken out at desired power ratios with high utility efficiency of a common laser oscillator.

A laser beam processing apparatus to solve the above-mentioned problems is described in the attached claims 1, 6 and 11, whereas preferred embodiments of the invention are described in the remaining claims.

The laser beam processing apparatus of this invention can distribute laser beams having different powers to respective work stations by utilizing the oscillation controlling signal, thereby controlling oscillation and stopping of the laser oscillator thereby to feed desired laser beam powers to respective work stations at a desired distribution ratio.

In the above-mentioned apparatus plural work stations can receive different laser beam powers suitable for respective machining or processing.

Furthermore, the laser beam processing apparatus in accordance with the present invention is improved so that its rotary chopper mirror, as beam dividing means, is not damaged by heat loss caused by high power laser beam.

Brief description of the drawings

Fig. 1 is the block diagram showing arrangement of the conventional example of the laser processing apparatus.

Fig. 2(a) is a block diagram of a laser beam processing apparatus embodying the present invention.

Fig. 2(b) is a front view of a rotary chopper mirror 15 or 16 to be caused in the embodiment of Fig. 2.

Fig. 3 is a waveform chart showing waveforms of electric signal and light beams of various parts of the embodiment of Fig. 2.

Fig. 4(a) is a block diagram showing another laser processing apparatus embodying the present invention.

Fig. 4(b) is a front view of a rotary chopper mirror to be used in the embodiment of Fig. 4.

Fig. 4(c) is a side view showing detailed configuration of a sensor 116 and 117 of Fig. 4.

Fig. 5 is a waveform chart showing waveforms of electric signal and light beams of various parts of the embodiment of Fig. 4(a).

Fig. 6 is a block diagram of another laser processing apparatus embodying the present invention.

Fig. 7 is a perspective view showing an example of beam-splitter 308 of Fig. 6.

Fig. 8(a) is a front view of a modified rotary mirror chopper to be used in any of the foregoing embodiments.

Fig. 8(b) is a sectional side view of the rotary chopper mirror of Fig. 8(a).

Fig. 9 is a front view of another modified rotary chopper mirror to be used in any of the foregoing embodiments.

Fig. 10 is a sectional view showing a section with light paths of the rotary chopper mirror of Fig. 9.

Fig. 11 is a block diagram of still another laser processing apparatus comprising a rotary chopper mirror which has curved surface mirrors.

Fig. 12 is a front view showing detailed cross-section of the rotary mirror chopper having the curved surface mirror.

Fig. 13 is a waveform chart showing waveforms of electric signal and light beams of various parts of the embodiments of Fig. 11 and Fig. 12.

Fig. 14(a) is a cross-sectional view showing one example of light beam chopper to be used in an embodiment of the present invention.

Fig. 14(b) is a sectional elevation view of the beam-splitter of Fig. 14(a).

Fig. 15(a) is a front view of still another rotary chopper mirror to be used in any of the foregoing embodiments.

Fig. 15(b) is a sectional view of the rotary chopper mirror of Fig. 15(a).

Fig. 16(a) is a front view of still another rotary chopper mirror to be used in any of the foregoing embodiments.

Fig. 16(b) is a sectional view of the rotary chopper mirror of Fig. 16(a).

Description of the preferred embodiments

Further, objects and features of the present invention will become clear from the below-mentioned detailed description of the preferred embodiments.

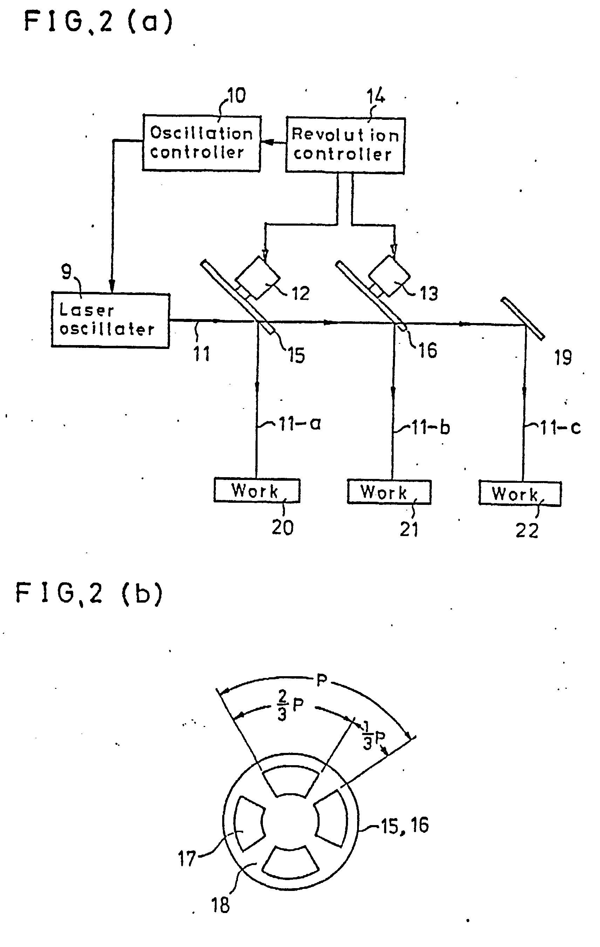

Fig. 2a shows a first embodiment of laser processing system, and Fig. 2b shows front face of a rotary chopper mirror 15 or 16, which is for a case of processing three works by one common laser oscillator 9. As shown in Fig. 2a, a laser oscillator 9 oscillates to issue a laser beam 11, under controlling by an oscillation controller 10. Revolution driving motors 12 and 13 for rotating the rotary chopper mirrors 15 and 16 are controlled of its revolution by a revolution controller 14. The rotary chopper mirrors 15 and 16 each have aperture parts 17 and mirror parts 18 disposed around the center, and ratio of areas in rotational direction of the aperture parts and the mirror parts are selected to be 2:1 in this example. The mirror parts are made, for instance, of an aluminum sheet and is plated by nickel in a non-electrolytic plating method and is followed by a mirror-face polishing process and subsequent vapor deposition of gold, to achieve 98% of reflectivity.

The rotary chopper mirrors 15 and 16 are disposed on a line of path of the laser beam 11 of the laser oscillator 9 in sequence, and thereafter an ordinary mirror 19 is disposed to change the path of the laser beam. Works 20, 21 and 22 to be processed by laser beam are disposed to receive laser beam which are reflected by the first rotary chopper mirror 15, the second rotary chopper mirror 16 and the ordinary mirror 19, respectively.

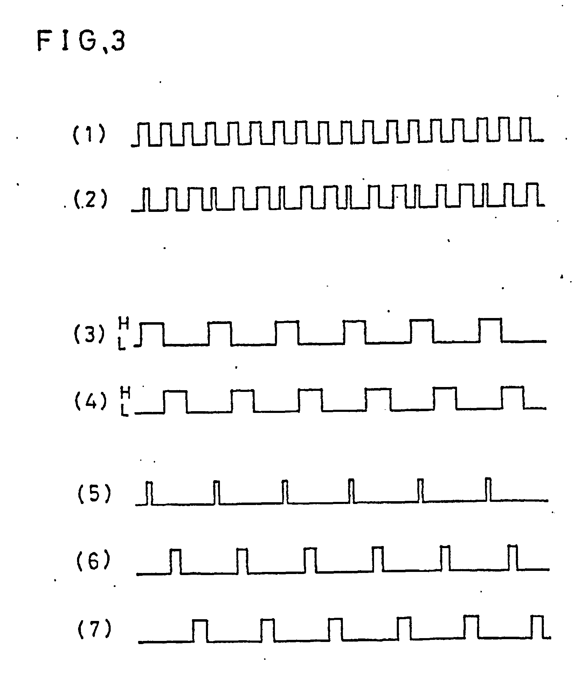

The operation of this embodiment is elucidated with reference to timing chart of Fig. 3 which shows timings of the laser oscillation controlling. Waveform (1) of Fig. 3 shows synchronizing signal for synchronizing the laser oscillation and controlling of the rotary chopper mirror rotation. Waveform (2) of Fig. 3 shows an oscillation controlling signal, with which oscillation and stopping of the laser is controlled, for example, in such a case of simultaneously cutting of a metal plate, cutting a metal sheet and welding metal works, by sharing a common large power laser, such as a $CO_2$ laser in different rate of power consumptions. The oscillation controlling signal is produced by modulating the pulse width of the waveform (1), to respond to rate of needed powers for the plural usages of the divided laser beams. Therefore, by utilizing change of the duty ratio of the oscillation controlling signal, the ratio of powers distributed to the plural processing of works 20, 21 and 22 through the divided laser beams 11-a, 11-b and 11-c, can be changed, and different processings with different output powers of laser beams can be carried out parallelly.

Waveforms (3) and (4) of Fig. 3 show rotation phases of the rotary chopper mirror 15 and 16, and the levels H and L respectively correspond to the aperture parts 17 and the mirror parts 18 of the rotary chopper mirror 15 and 16, respectively. The rotary chopper mirrors 15 and 16 are controlled of the rotation by the rotation controller 14. The timings of the oscillating time periods and non-oscillating time periods of the laser oscillator 1 correspond to high level time periods and low level time periods of the waveform (2), respectively. Among the laser beam power, such part as being reflected by the mirror parts 18 of the rotary chopper mirror 15, namely the divided beam 11-a, is shown by the waveform (5) of Fig. 3, and is fed to the work 20. On the other hand, such part which has passed through the aperture parts 17 and is reflected by the mirror parts 18 of the rotary chopper 16, namely the divided beam 11-b, is fed to the work 21. And, finally, the last part, namely such part which has passed through the aperture parts 17 and is reflected by the ordinary mirror 19, namely the divided beam 11-c, is fed to the work 22. Thus, the output beam of the common laser oscillator is divided into plural parts with a desired ratio defined by the pulse width modulation, or in other words, selection of desired duty ratio.

In the same manner as the above-mentioned embodiment, but only varying number of sequentially disposed rotary chopper mirrors, the number of work station can be arbitrarily selected. The kind of processing can be cutting, welding, engraving or any other possible processings utilizing laser beam energy.

The above-mentioned embodiment enables simultaneous, or parallel processings at different work positions, only using a single laser oscillator. And that as a result of such parallel utilization of the divided laser beams from a single common laser oscillator of a high output power, the expensive high power laser oscillator can be utilized at a high utility factor and with desired ratio of power consumptions for different work stations.

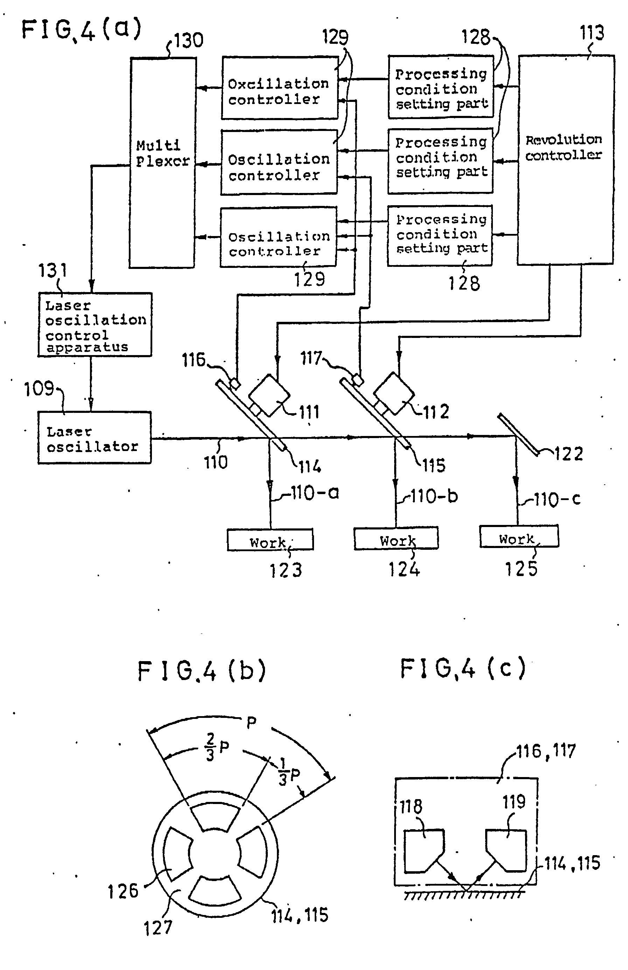

Fig. 4 shows a block diagram of a second embodiment of the present invention. In this embodiment three works are simultaneously processed by one common laser oscillator. In Fig. 4, laser oscillator 109 radiates a pulse laser beam 110. Revolution driving motors 111 and 112 for rotating the rotary chopper mirrors 114 and 115, respectively, are controlled of its revolution by a revolution controller 113. As shown in Fig. 4(b), the chopper mirror 114 and 115, each has aperture parts 126 and mirror parts 127 disposed around the center, and ratio of areas in rotational direction of the aperture parts and the mirror parts are selected to be 2:1 in this example. The mirror parts are made, for instance, of an aluminum sheet and is plated by nickel in a non-electrolytic plating method and is followed by a mirror-face polishing process and subsequent vapor deposition of gold to achieve 98% of reflectivity. The shape of the aperture part and the mirror part of the rotary chopper mirror need not be made with high precision because the revolution of the rotary chopper mirror is sensed by the photosensor. The rotary chopper mirror is designed after the consideration with a diameter and an on-time of the laser beam and its number of revolution.

As shown in Fig. 4(c), two photosensors 116 and 117, which are composed with light emitting device 118 and light detecting device 119 are disposed over the surface of the rotary chopper mirror 114 and 115, respectively, in order to detect their mirror parts. A laser oscillation control apparatus 131 makes pulse signals basing on the detecting signal of the photosensor 116 and 117, and controls the laser oscillator. An ordinary mirror 122 is disposed to change the path of the laser beam.

Three works 123, 124 and 125 are set up on the predetermined positions, respectively.

Pulse widths and levels of peak value of the respective laser beams corresponding to the processing conditions for the works 123—125 are set by processing condition setting parts 128, 128, 128. Oscillation controllers 129, 129, 129 oscillate laser oscillation control pulses basing on data which are set by the processing condition setting parts 128, 128, 128 and detected signals from the photosensors 116 and 117. A multiplexer 130 mixes the laser oscillation control pulses which are generated by the oscillation controllers 129, and issues an output signal to a laser oscillation control apparatus 131.

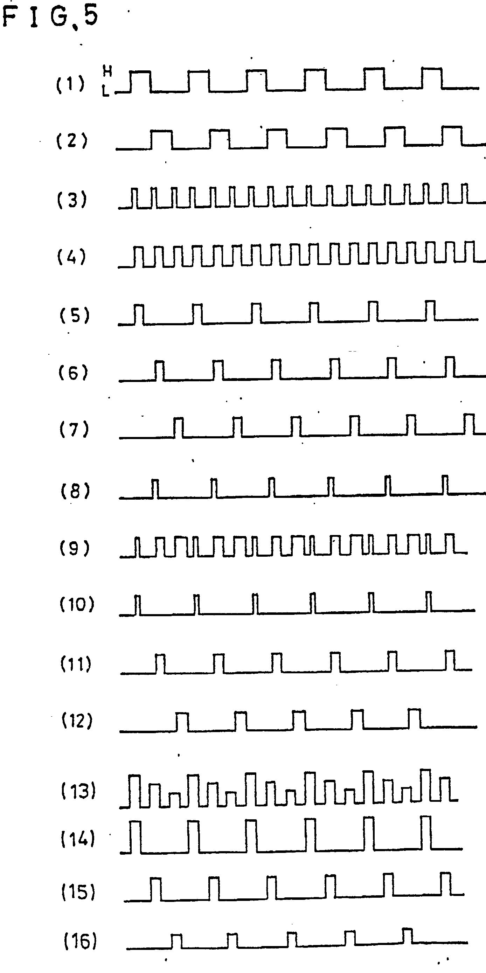

The operation of this embodiment is elucidated with reference to timing chart of Fig. 5 which shows timing of the laser oscillation controlling.

Two rotary chopper mirrors 114 and 115 which are controlled by the revolution controller 113 are rotating at the same number of rotation.

When the number of the rotation of the rotary chopper mirror is 300—3300 rpm, the pulse frequency of the laser beam becomes 20—220 Hz, because the rotary chopper mirror has four apertures on it.

The detecting signals of the photosensors 116 and 117 are shown in Fig. 5 (1) and (2), a phase shift between above-mentioned Fig. 5 (1) and (2) shows that two rotary chopper mirrors are rotating keeping the phase difference of 120 degree. "H" in the waveform (1) of Fig. 5 corresponds to detecting signals of the mirror parts and "L" corresponds to detecting signal of the aperture parts. Waveform (3) of Fig. 5 shows the pulse signal oscillated by the laser oscillation control apparatus 131. This pulse signal controls the laser oscillator 109 to process the three works 123, 124 and 125 under each other uniform processing conditions.

Waveform (4) of Fig. 5 shows the oscillated laser beam 110 under the controlling of the pulse signal (3) of Fig. 5. The laser beam 110-a which is reflected by the mirror part of the rotary chopper mirror 114 is shown in the waveform (5) of Fig. 5, and applied to the work 123.

On the other hand, remainder of the laser beam which passed the aperture part of the rotary chopper mirror 114 is led to the rotary chopper mirror 115, and the laser beam 110-b which is reflected by the mirror part of the rotary chopper mirror 115 is led to the work 124. Remainder of the laser beam 110-c which passed the aperture part of the rotary chopper mirror 115 is reflected by the ordinary mirror 122 and applied to the work 125.

As above-mentioned, this embodiment enables the processing at the three places by one common laser oscillator simultaneously.

On the other hand, in order to process only one work or to process three works under the different processing condition each other, the laser oscillator 109 is controlled by the laser oscillation control apparatus 131 as follows. The waveform (8) of Fig. 5 shows the control pulse oscillated by the laser oscillation control apparatus 131, and this control pulse controls the laser oscillator 109 for oscillating a laser beam which is shown in the waveform (6) of Fig. 5. The timing of the pulse train in the waveform (6) of Fig. 5 coincides with the timing of the aperture part of the rotary chopper mirror 114 and coincides with the timing of the mirror part of the rotary chopper mirror 115. Therefore, the laser beam 110 passed the aperture part of the rotary chopper mirror 114 is reflected by the mirror part of the rotary chopper mirror 115, and applied to the work 124 only.

In case that the kinds of the process of three works are different, the control pulses of the laser oscillation control apparatus 131 become pulse signals shown in Fig. 5 (9). As a result, divided laser beam 110-a, 110-b and 110-c become pulse signals as shown in Fig. 5(10), Fig. 5(11) and Fig. 5(12), respectively. Above-mentioned three kinds of the process are, for example, cutting a thick plate on the work 123, cutting a thin plate on the work 124 and welding on the work 125. The change of a duty ratio which is indicated by a ratio of an on-time and an off-time. And the control of an output intensity of the laser beam 110 enables simultaneous processing of three different kinds of processing by using one common laser oscillator. It is possible to change the kind of the process by change of the pulse frequency which is made by change of the number of the rotation of the rotary chopper mirror.

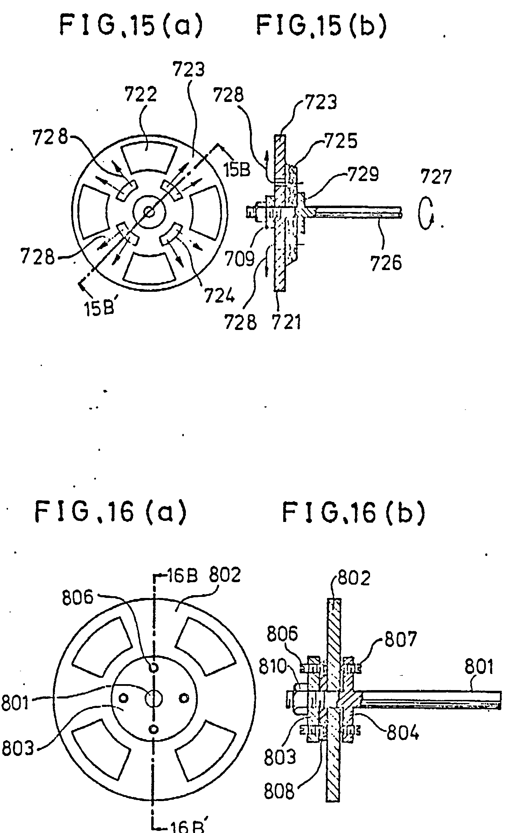

Other example of the control pulses of the laser oscillation control apparatus 131 for a case wherein kinds of the processes for three works are different from each other is shown in Fig. 5 (13). In this example, peak values of the laser beam are changed instead of the change of the pulse width shown in the waveform (13) of Fig. 15. Respective pulse signals of the laser beams which are to be applied to the works 123, 124 and 125 are shown in Fig. 5 (14)—Fig. 5 (16), respectively.

The laser processing apparatus of this embodiment can make plural processing simultaneously by using one common laser pulse oscillator synchronized with the rotation of the rotary chopper mirror, and a manufacturing line system including the laser processing apparatus of the present invention is improved remarkably in an efficiency, because the laser oscillator can be utilized in a very high efficiency.

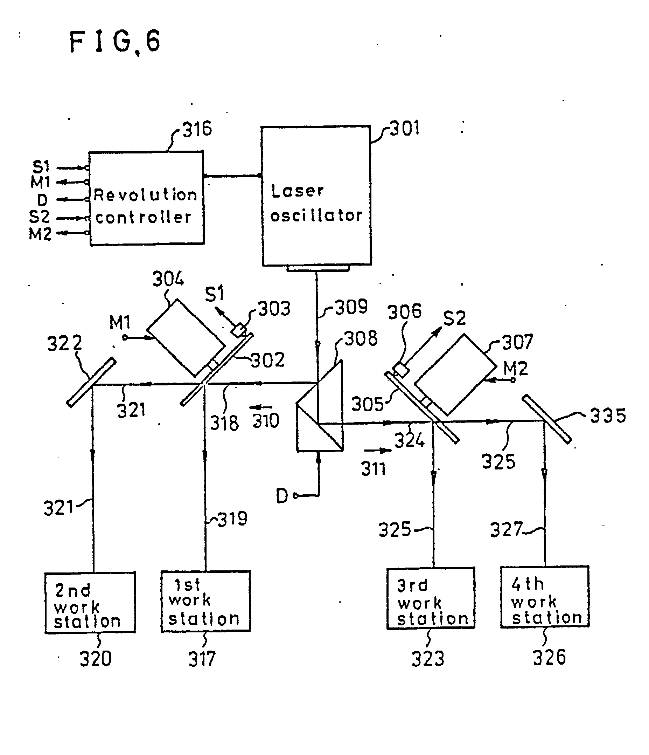

Fig. 6 shows a block diagram of a third embodiment of the present invention. In this embodiment, four works are simultaneously processed by using one common laser oscillator.

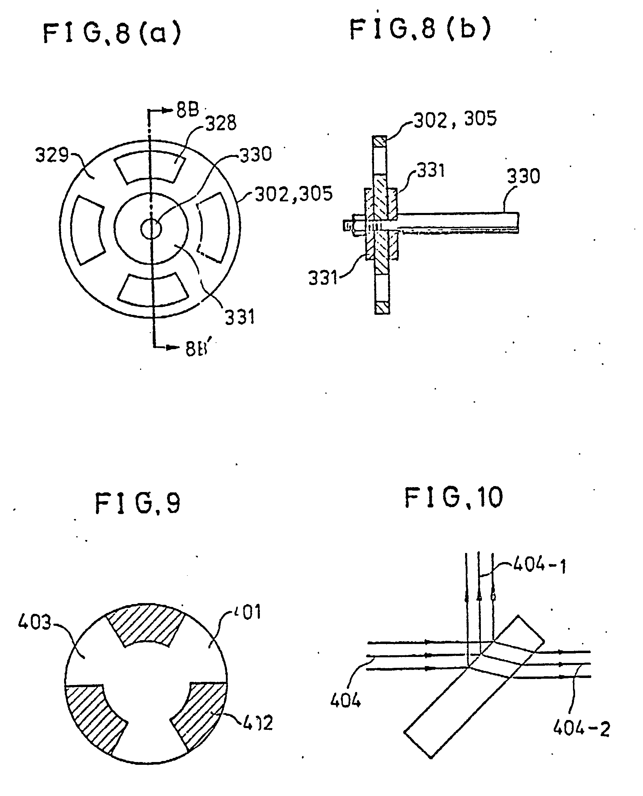

In Fig. 6, a laser oscillator 301 radiates a laser beam 309. First and second revolution driving motors 304 and 307 for rotating the rotary chopper mirrors 302 and 305, respectively, are controlled of its revolution by a revolution controller 316. The rotary chopper mirrors 302 and 305 each has, as is shown in Fig. 8(a) and Fig. 8(b), aperture parts 328 and mirror parts 329 disposed around center. Two flanges 331, 331 clamp the chopper mirror 302 or 305 and are fixed to a shaft 330. A first sensor 303 and a second sensor 306 are disposed over the surface of the first and the second rotary chopper mirrors 302 and 305, respectively, in order to detect their mirror parts.

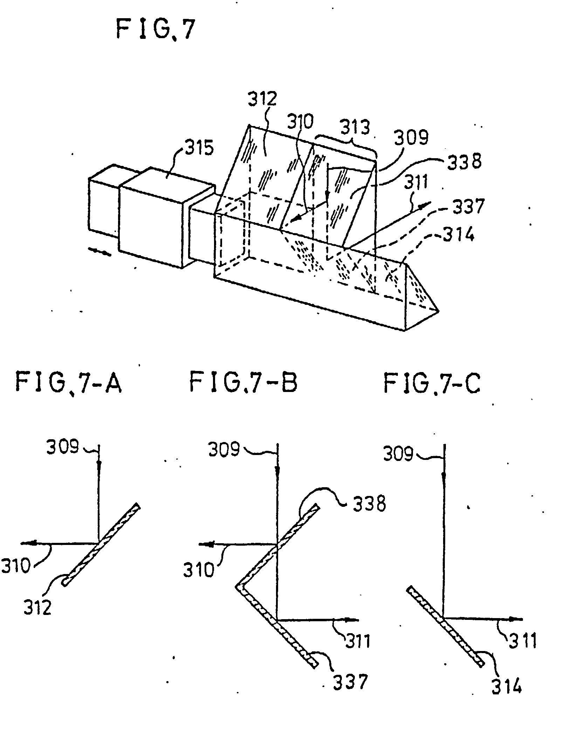

A laser beam divider 308 is controlled by the revolution controller 316, and the laser beam 309 radiated from the laser oscillator 301 is reflected selectively to both directions at one time and to either one direction of a first direction 310 and a second direction 311 at the other time. The laser beam distributor 308, as is shown in detail Fig. 7, provides a first normal mirror 312, a known beam-splitter 309 and a second normal mirror 314.

The first normal mirror 312 is for reflecting the laser beam 309 to the first direction 310, the beam-splitter 313 for splitting the laser beam 309 to both the first direction 310 and the second direction 311 provides a normal mirror 337 und a half mirror 338. The second normal mirror 314 is for reflecting the laser beam 309 to the second direction 311. The laser beam distributor 308 further has a positioning means 315 for laterally moving the above-mentioned structure.

The side view and the cross-sectional view of the rotary chopper mirrors 302 and 305 are shown in Fig. 8(a) and Fig. 8(b), respectively. The rotary chopper mirror is provided with aperture parts 328 for passing the laser beam and mirror parts 329 for reflecting the laser beam. This rotary chopper mirror is clamped by two flanges 331, 331. The rotary shaft 330 is inserted in the center holes of these flanges and the rotary chopper mirror 329.

The revolution controller 316 which is controlled based on the signal of the first and second sensors 303 and 306 controls the first driving motor 304 and the second driving motor 307, and the first rotary chopper mirror 302 and the second rotary chopper mirror 305 are controlled in synchronism with each other. The revolution controller 316 controls the oscillation of the laser oscillator 301. The positioning means 315 of the laser beam distributor 308, so that one of the three positions of the first normal mirror 312, the beam-splitter 313 and the second normal mirror are selected thereby. A laser beam 318, which is made by distributing the laser beam 309 by a laser beam divider 308 to a first direction 310, is reflected by mirror parts of a first rotary chopper mirror 302, and a reflected laser beam 319 is applied to a first work station 317. A laser beam 321, which has passed through aperture parts of the first rotary chopper mirror 302 is reflected by a third normal mirror 322 and is applied to a second work station. A laser beam 324 which is made by distributing the laser beam 309 to a second direction 311 by the laser beam distributor 308 is reflected by the mirror parts of a second rotary chopper mirror 305, and the reflected laser beam 325 is applied to a third work station 323. A laser beam 325, which has passed through the aperture parts of the second rotary chopper mirror 305, is reflected by a fourth normal mirror 335, and the reflected laser beam 327 is applied to a fourth work station 326.

The operation and effect of a laser processing apparatus of the above-mentioned third embodiment is as follows.

When the laser beam distributor 308 is set by the positioning means 315 at the position that the beam-splitter 312 receives the laser beam 309, the first, the second, the third and the fourth work stations 317, 320, 323 and 326 have substantially the same processing powers of the laser beam, because the laser beam 309, which is oscillated by the laser oscillator 301, is divided into almost equal two laser beams 318 and 311, and they are further divided into two laser beams by the rotary chopper mirrors 302 and 305 by the dividing process which has been mentioned in the description of the second embodiment. The first, the second, the third and the fourth work stations are applied with freely controlled laser beam by revolvings of the first and the second driving motors 304 and 307, under controlling by the revolution controller 316. Each intensity of the divided laser beams 318 and 324 is half of that of the laser beam 309, and the processing capacity become half of the original laser beam 309.

When the laser beam distributor 308 is switched by the positioning means 315 to the position that the normal mirror 312 receives the laser beam 309, two works are simultaneously processed at the first and the second work stations 317 and 320. When the laser beam distributor 308 is switched to the position that the second normal mirror 314 receives the laser beam 309, two works are simultaneously processed at the third and the fourth work stations 323 and 326. In the above-mentioned latter two cases, since the laser beam 309 is not divided by the beam splitter 313, the works on the work stations are processed by almost the full power of the laser beam 309.

The feature of the rotary chopper mirror is to divide the laser beam into two directions without decrease of its energy. In case that the power of the laser beam 319, which is applied to the work station 317 is intended to be increased, the duty ratio of the oscillated laser pulse must be increased. But if the duty ratio becomes over around 40—50%, the rotary chopper mirror 302 of this embodiment can not guide the laser beam 319 perfectly as intended, because the laser beam has a certain diameter. Accordingly, it is necessary that the rotary chopper mirror 302 is used in a stopped state as stationary normal mirror, for processing only one work at a work station. Though the number of usable work station is only one, the time periods for setting up works to the work stations can be shortened in total, and the efficiency of operation of the laser processing apparatus increases by using the remainder work station as preparation work station.

In the above-mentioned third embodiment, the laser processing apparatus provided with both the rotary chopper mirror and the laser beam distributor wherein the beam-splitter is combined to the normal mirror has very high efficiency of operation, since the total processing capability of the laser oscillator can be utilized very effectively.

Fig. 9 is a plan view of a first embodiment of the rotary chopper mirror. This embodiment is suitable for a laser beam of a $CO_2$ laser. A substrate 401 is a transparent material for $CO_2$ laser light, for example, ZnSe. The surfaces of the substrate are well polished in order to avoid damage when transmitting the laser beam. A vapor deposition of gold is applied to three reflection parts 402, and a remainder is a transparent part 403.

Fig. 10 shows a path of the laser beam. When a laser beam 404 is applied to gold-vapor deposited parts, the laser beam 404 is reflected as a laser beam 404-1. When the laser beam 404 is applied to the transparent part 403, the laser beam 404 passes through the substrate, and goes out in a path as designated by 404-2 in the right part of Fig. 10.

Above-mentioned rotary chopper mirror of the embodiment has no aperture on the substrate 401, and therefore the surface of substrate is smooth. The rotary chopper mirror has superior dynamic balance, and therefore is capable of very precise rotation. There is no internal distortion due to mechanical machining, and accordingly, smoothness of the surface is maintained for a long time.

When the laser beam passes through the transparent part of the substrate, the path of the laser beam refracts as shown in Fig. 10. Therefore, the diameter of the substrate can be smaller in comparison with the substrate with the apertures. The surface of the rotary chopper mirror of this embodiment is smooth, therefore, an air stream noise can be minimized and there is no trouble of noise. The rotary chopper mirror drags little air during rotation, and it is very rare to receive damage on the surface by the dust of the air. Any materials which passes the laser beam can be used as the substrate of the rotary chopper mirror of the present invention.

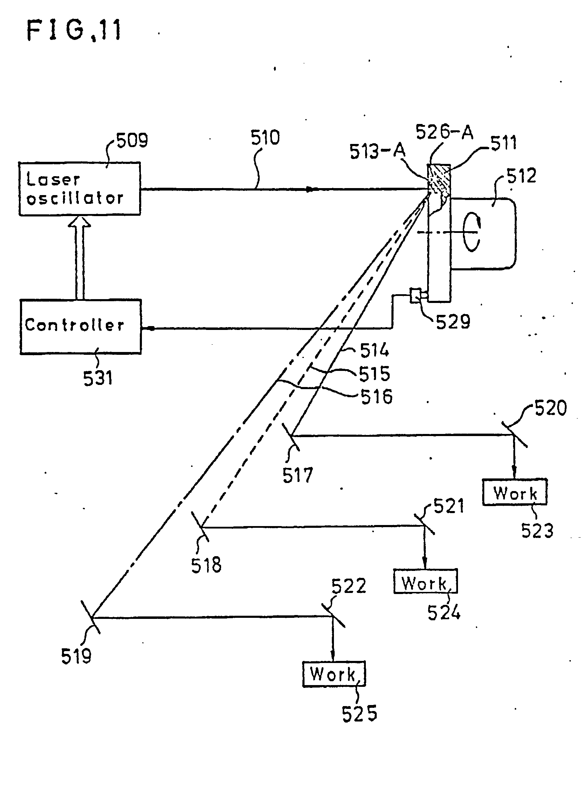

Fig. 11 shows still other embodiment, and in this embodiment, three works are processed by using one laser oscillator.

In Fig. 11, a laser oscillator 509 oscillates a pulse laser beam 510. A rotary mirror 511 is controlled its revolution by a rotary driving means 512. Three reflecting mirrors 513-A, 513-B and 513-C of concave mirror face are disposed on the rotary mirror 511, respectively, for reflecting the laser beam 510. (513-B, 513-C are not shown). Two reflection mirrors 517 and 520 reflect a laser beam 514 for a work 523. Other two reflection mirrors 518 and 521 reflect a laser beam 515 for a work 524.

Further, two reflection mirrors 519 and 522 reflect a laser beam 516 for a work 525.

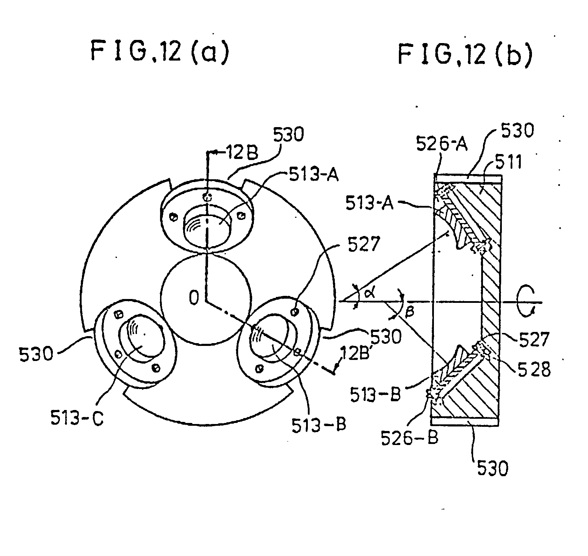

A plan view and a cross-sectional view cutted at a line X—O—X of the rotary disc are shown in Fig. 12(a) and Fig. 12(b), respectively. Three reflection mirrors 513-A, 513-B and 513-C are disposed on the rotary disc 511 with each angle of α, β and γ (not shown), respectively, against the axis of the rotary disc. Each angle is adjusted by adjusting bars 526-A, 526-B and 526-C, which are tilted by an adjusting screw 527 and adjusting spring 528. A sensor 529, shown in Fig. 11, detects three indents 530, 530, 530 which are disposed on an outer periphery of the rotary disc 511 corresponding with each reflecting mirror 513-A, 513-B and 513-C. An oscillation controller 531 controls a laser oscillator 509 so as to generate pulse signals correspond to detecting signals of the sensor 529.

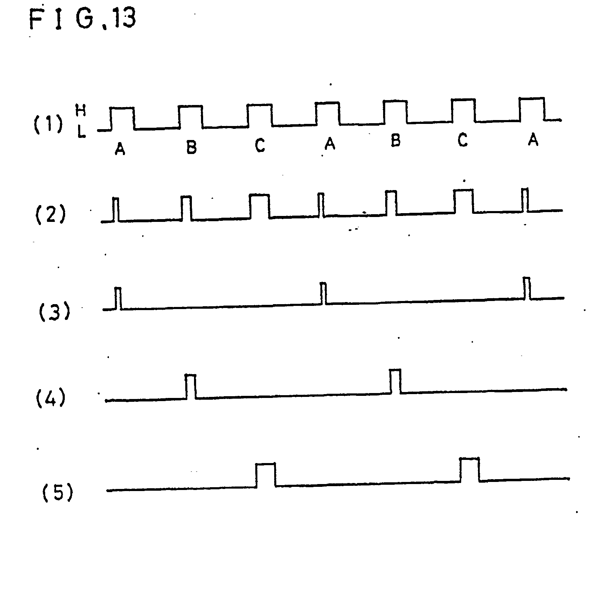

Operation for processing of this embodiment is illustrated in Fig. 11 and a timing chart Fig. 13.

The rotary disc 511 is rotated by the rotary driving mean 512 which is controlled of its number of revolution. The waveform (1) of Fig. 13 shows an output pulse train from the sensor 529. In this output pulse, A, B and C correspond to detecting signals of the reflecting mirrors 513-A, 513-B and 513-C. For example, the laser beam is divided into three parts, and each divided laser beam is applied to the work 523 of a thick plate for cutting, the work 524 of a thin plate for cutting and the work 525 for welding, respectively. The laser beam oscillator 509 is controlled to generate pulse signals shown in the waveform (2) of Fig. 13 corresponding to the output signals of the sensor 529. The direction of oscillated laser beam 510 is switched as different mirrors 513-A, 513-B and 513-C in turn comes in the laser beam path 510. The reflected laser beams 514, 515 and 516 are led toward the three mirrors 517, 518 and 519, respectively. The laser beams reflected by the above-mentioned three mirrors are reflected again by other three mirrors 520, 521 and 522, and are applied to the three works 523, 524 and 525, respectively. The waveforms of the laser beams 514, 515 and 516 are shown in Fig. 13(3), Fig. 13(4) and Fig. 13(5), respectively.

In the above-mentioned embodiment, the three works 523, 524, 525 are processed under the three different processing conditions by using one laser beam oscillator which is controlled by the duty ratio.

The oscillated laser beam is not restricted to the waveform shown in Fig. 13(2), wherein only the duty ratio is changed. For example, the kind of the process can be changed by changing each oscillated pulse frequency shown in Fig. 13(3), Fig. 13(4) or Fig. 13(5), or by changing of the intensity of the laser beam. On the other hand, the process can be changed by changing the repeating time of the pulse train shown in Fig. 13(1), and that repeating time is changed by changing of the number of rotation of the rotary disc. The number of the mirror which is provided on the rotary disc is selected freely. Adjusting means of each mirror is not limited to the method of this embodiment. Any methods for adjustment of the angle between the axis of the rotary disc and the normal line of each mirror can be used, and the above-mentioned angle of each mirror is adjusted to the different angle each other. By the above-mentioned adjustment of angle, the laser beam can be advanced to an aimed direction. In this embodiment, the laser beam from the laser oscillator is reflected toward the different directions by the plural reflection mirrors disposed on the rotary disc with the different angles each other. Therefore, the plural works can be processed by using one laser oscillator, and a manufacturing line system including the laser processing apparatus of the present invention is improved remarkably in an efficiency, because the laser oscillator can be utilized in a very high efficiency.

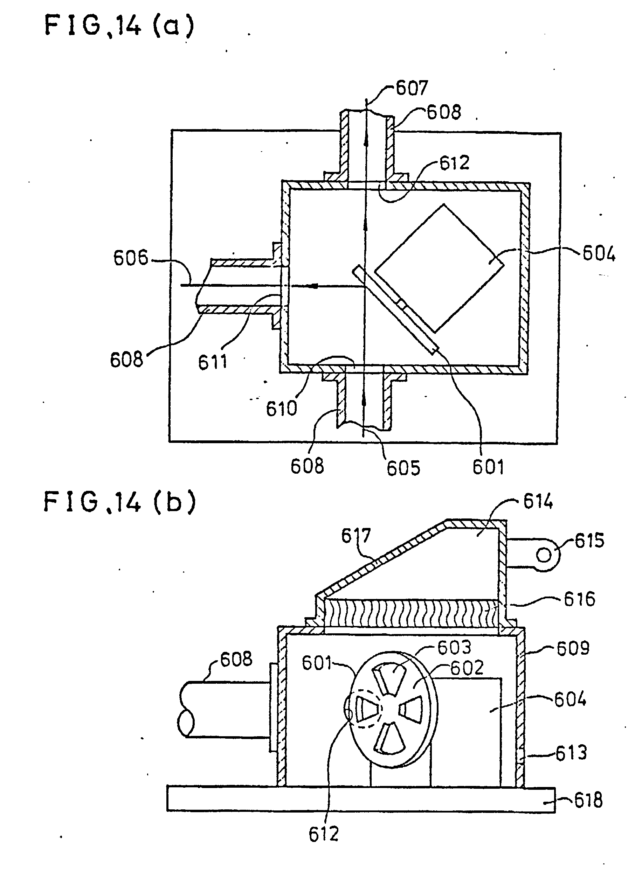

The following embodiment relates to a housing to cover the rotary chopper mirror 601, its driving motor 604 and an air blower means for blowing air to the rotary chopper mirror 601 through the air filter 616. The plain view and the cross-sectional view cutted at a line A—A' are shown in Fig. 14(a) and Fig. 14(b), respectively. The rotary chopper mirror 601 with mirror parts 602 and aperture parts 603 is fixed to the driving motor 604. The oscillated laser beam 605 is reflected to the direction 606 by the mirror parts 602 of the rotary chopper mirror 601. The laser beam 607 passes through the aperture parts 603 of the rotary chopper mirror 601. The three laser path protection tubes 608, 608, 608, are disposed at the first opening 610, at the second opening 611 and at the third opening 612. A hole 613 is disposed at a low part of the housing 609. The filter unit 614 is fixed on the top of the housing 609. The filter unit 614 provides a blower 615, a filter 616 and a cover 617. A base plate 618 is for mounting the laser beam distributor thereon.

In this embodiment, the function and the operation of the rotary chopper mirror 601 are similar to the aforementioned third embodiment, but the rotary chopper mirror of this embodiment is protected from the dust. The air which is blown by the blower 615 goes through the filter 616. The clean air which is removed of dust is applied to the rotary chopper mirror 601 in operation. Therefore, the rotary chopper mirror 601 is isolated from the atmosphere including many dust such as in a factory. Since its surface is always kept clean by the clean air flow, the rotary chopper mirror is not damaged by the dust or small particles. In this embodiment, the clean air through the filter is applied directly to the rotary chopper mirror, and its environment is kept on the cleanliness of about class 100. Air flow from the blower 615 is blown in the housing 609 with a certain air pressure and any kinds of dust can not enter into the housing 609 from the small hole and the chink of the housing. Therefore, the rotary chopper mirror has a long life.

Other embodiment of a rotary chopper mirror is shown in Fig. 15. A side view and a cross-sectional view cutted in a line A—A' are shown in Fig. 15(a) and in Fig. 15(b). The rotary chopper mirror 727 provides the aperture parts 722, the reflecting parts 723 and air holes 724, which are disposed between the reflecting parts 723 and a rotary shaft 726. A filter 726 is clamped by the rotary chopper mirror 721 and a flange 729, and covers the air holes 724 at the opposite surface to the reflecting parts 723 of the rotary chopper mirror 721. When the rotary chopper mirror 721 rotates to the rotating direction 727, air flows 728 as shown by arrow 728 arise. Since the air holes 724 are covered by the air filter 725, air flows 728, 728 flowing the surface of the reflecting parts 723 come through the filter 725, and air flows 728, 728 become clean. In case that the small pieces of filter are fixed on the holes 724 instead of the disc filter of this embodiment, the effect of the filter is the same. In this embodiment, the clean air flows always during the operation of the rotary chopper mirror, and the surface does not become dirty. Therefore, the rotary chopper mirror maintains a long life.

Further embodiment of the rotary chopper mirror is shown in Fig. 16. A plain view and a cross-sectional view of this embodiment are Fig. 16(a) and Fig. 16(b), respectively. The rotary chopper mirror of this embodiment has a rotary shaft 801, plural reflecting parts 802, a first flange 803 with four adjusting screws 806, a second flange 804 with four adjusting screws 807 and an elastic member 808, clamped between the first flange 804 and the rotary chopper mirror. The second flange 804 is fixed on the rotary shaft 801. The rotary chopper mirror, the elastic member 808 and the first flange 803 are inserted by the rotary shaft 801, and screwed by a nut 810 to the second flange. For example, the elastic member 808 is made of urethane rubber. The angle between the shaft 801 and the surface of the rotary chopper mirror is adjusted as follows. At first, the screws 806 and 807 are loosened. The rotary chopper mirror, the elastic member 808 and the first flange 803 are screwed loosely by the nut 810. In the first step, the four screws 807 are screwed by turns and push the surface of the rotary chopper mirror 802. In this step, the angle between the surface of the rotary chopper mirror 802 and the shaft 801 is adjusted within 5 seconds of angle. The angle is measured by an auto-collimotor.

In this first adjustment step, the rotary chopper mirror 802 is held by the elastic force of the elastic member 808. In the second step, the screws 806 are screwed to push the surface of the rotary chopper mirror 802, and the adjusted rotary chopper mirror 802 is held by the screws 806 and 807. In the above-mentioned adjustment process, the elasticity of the elastic member 808 enables to adjust from one side of the rotary chopper mirror, and the manipulation of the adjustment is very easy. The elastic member 808 can be disposed between the rotary chopper mirror 802 and the second flange 804, or can be disposed at both sides of the rotary chopper mirror 802. The configuration of this embodiment of the rotary chopper mirror 802 enables easy and precise adjustment of the mirror mounting, and a precise rotary chopper mirror is obtainable.

**Claims**

1. A laser beam processing apparatus comprising:
— a laser oscillator (109) to procedure a light beam (110),
— a plurality of rotary chopper mirrors (114, 115) disposed in a path of said light beam (110),
— driving means (111, 112) for rotating said rotary chopper mirrors (114, 115),
— at least one ordinary mirror (122) for reflecting a light beam passing through said rotary chopper mirrors to a work,
— a rotation sensor (116, 117) provided on each of said rotary chopper mirrors (114, 115) for sensing angular positions of mirror parts (127) and aperture parts (126) of said rotary chopper mirrors (114, 115), to procedure an oscillation controlling signal,
— processing condition setting means (128) for setting a pulse width and level of peak value of said laser beam (110) corresponding to processing conditions,
— an oscillation controller (129) for oscillating pulse signals based on data of said processing condition setting means (128) and said oscillation control signal of said rotation sensors (114, 115),
— a multiplexer (130) for mixing output pulses of said oscillation controllers (129) and for issuing control pulses to an oscillation controlling means (131), and
— oscillation controlling means (131) for controlling phase and frequency of oscillation and stopping of said laser oscillator (109).

2. A laser beam processing apparatus in accordance with claim 1, wherein said chopper mirrors (114, 115) comprise a substrate (403) which is transparent (401) to said light beam and has a coating (402) of a high reflectivity to said light beam (110) at selected parts thereof.

3. A laser beam processing apparatus in accordance with claim 1, comprising a housing (609) for covering said rotary chopper mirror (601) and driving means (604) of said rotary chopper mirror (721), and further comprising air blowing means (615) for blowing air through a filter member (616) provided at a part of said housing (609).

4. A laser beam processing apparatus in accordance with claim 1, wherein said rotary chopper mirror (721) has air blowing apertures (724) around the axis (726) thereof, and wherein filter means (725) are provided on the face of said rotary chopper mirror (721) which is opposite to the face having a coating (723) of a high reflectivity to said light beam (110).

5. A laser beam processing apparatus in accordance with claim 1, comprising a pair of flanges (803, 804) fixed on a rotary shaft (801) with a predetermined gap in-between for holding said rotary chopper mirror (802) in-between and resilient means (808) inserted between one of said flanges (803) and said rotary chopper mirror (802), and tying means (810) for tying said flanges (803, 804) to narrow said gap thereby to tightly fix said rotary chopper mirror (802) between said flanges.

6. A laser beam processing apparatus comprising:
— a laser oscillator (301) to produce a light beam (309),
— a beam distributor (308) having at least one full reflection mirror (314, 337) and a beam splitter (312, 338) disposed in a manner to be put alternatively into the path of said light beam (309) thereby to distribute said light beam (309) to desired directions in a predetermined sequence,
— a plurality of rotary chopper mirrors (302, 305) for dividing said light beam (309) issued from said beam distributor (308),
— driving means (304, 307) for rotating said rotary chopper mirrors (302, 305),
— a rotation sensor (303, 306) provided on each of said rotary chopper mirrors (302, 305) for sensing angular positions of mirror parts (127) and aperture parts (126) of said rotary chopper mirror (302, 305) to produce an oscillation controlling signal,
— at least one ordinary mirror for reflecting a light beam passing through said rotary chopper mirror to a work, and
— controlling means (316) for controlling phase and frequency of start and stop of oscillation of said laser oscillator (301) (Figs. 6+7).

7. A laser beam processing apparatus in accordance with claim 6, wherein said rotary chopper mirror comprises a substrate (403) which is transparent to said light beam (309) and has a coating (402) of a high reflectivity to said beam (309) at selected parts thereof.

8. A laser beam processing apparatus in accordance with claim 6, comprising a housing (609) for covering said rotary chopper mirror and a driving means (604) of said rotary chopper mirror (601), and further comprising air blowing means (615) for blowing air through a filter member (616) provided at a part of said housing (609).

9. A laser beam processing apparatus in accordance with claim 6, wherein said rotary chopper mirror (721) has air apertures (724) around the axis (726) thereof, and wherein filter means (725) are provided on the face of said rotary chopper mirror (721) which is opposite to the face having a coating (723) of a high reflectivity to said light beam.

10. A laser beam processing apparatus in accordance with claim 6, comprising a pair of flanges (803, 804) fixed on a rotary shaft (801) with a predetermined gap in-between for holding said rotary chopper mirror (802) in-between and resilient means (808) inserted between one of said flanges (803, 804) and said rotary chopper mirror (802), and tying means (810) for tying said flanges (803, 804) to narrow said gap thereby to tightly fix said rotary chopper mirror (802) between said flanges (803, 804).

11. A laser beam processing apparatus comprising:
— a laser oscillator (509) to produce a light beam (510),
— a rotary chopper mirror (511) having a plural number of reflection mirrors (513) disposed around a rotation shaft with their optical normal lines making different angles to the axis of said rotation shaft,
— driving means (512) for rotating said rotary chopper mirror (511),
— ordinary mirrors (517, 518, 519, 520, 521 and 522) for reflecting light beams (514, 515, 516) reflected by said rotary chopper mirror (511) to the respective works,
— a rotation sensor (529) for sensing angular positions of said reflection mirrors (513), to produce an oscillation controlling signal, and
— controlling means (531) for controlling phase and frequency of start and stop of oscillation of said laser oscillator (509) (Figs. 11+12).

12. A laser beam processing apparatus in accordance with claim 11, comprising a housing (609) for covering said rotary chopper mirror (601) and driving means (604) of said rotary chopper mirror (601), and further comprising air blowing means (615) for blowing air through a filter member (616) provided at a part of said housing (609).

13. A laser beam processing apparatus in accordance with claim 11, wherein said rotary chopper mirror (721) has air blowing apertures (724) around the axis (726) thereof, and wherein filter means (725) are provided on the face of said rotary chopper mirror (721) which is opposite to the face having a coating (402) of a high reflectivity to said light beam.

14. A laser beam processing apparatus in accordance with claim 11, comprising a pair of flanges (803, 804) fixed on a rotary shaft (801) with a predetermined gap in-between for holding said rotary chopper mirror (802) in-between and resilient means (808) inserted between one of said flanges (803, 804) and said rotary chopper mirror (802) and tying means (810) for tying said flanges (803, 804) to narrow said gap thereby to tightly fix said rotary chopper mirror (802) between said flanges.

15. A laser beam processing apparatus in accordance with claim 11, wherein respective reflection mirrors (513) have concave surfaces.

**Patentansprüche**

1. Laserstrahlbearbeitungsgerät mit
— einem Laseroszillator (109) zum Erzeugen eines Lichtstrahls (110),
— einer Veilzahl von in der Bahn des Lichtstrahls (110) angeordneten Unterbrecherdrehspiegeln (114, 115),
— Antriebsvorrichtungen (111, 112) zum Drehen der Unterbrecherdrehspiegel (114, 115),
— wenigstens einem normalen Spiegel (122) zum Reflektieren eines durch die Unterbrecherdrehspiegel hindurchgegangenen Lichtstrahls auf ein Werkstück,
— je einem an jedem der Unterbrecherdrehspiegel (114, 115) vorgesehenen Drehfühler (116, 117) zum Abtasten der Winkelstellung von Spiegelteilen (127) und Öffnungsteilen (126) der Unterbrecherdrehspiegel (114, 115) zum Erzeugen eines Oszillationssteuersignals,
— einer Bearbeitungszustandseinstelleinrichtung (128) zum Einstellen einer Impulsbreite und eines Spitzenwertpegels des Laserstrahls (110) gemäß den Verarbeitungsbedingungen,
— einer Oszillationssteuerung (129) für Oszillationsimpulssignale, die auf Daten der Bearbeitungszustandseinstelleinrichtung (128) und auf dem Oszillationsimpulssignal der Drehfühler (114, 115) beruhen,
— einem Multiplexer (130) zum Mischen der Ausgangsimpulse der Oszillationssteuerungen (129) und zum Abgeben von Steuerimpulsen an eine Oszillationssteuereinrichtung (131), und mit
— einer Oszillationssteuereinrichtung (131) zum Steuern von Oszillationsphase und -frequenz und zum Anhalten des Laseroszillators (109).

2. Laserstrahlbearbeitungsgerät nach Anspruch 1, wobei die Unterbrecherspiegel (114, 115) ein Substrat (403) aufweisen, welches für den Lichtstrahl durchlässig (401) ist und einen den Lichtstrahl an bestimmten Stellen in hohem Maße reflektierenden Überzug (402) aufweist.

3. Laserstrahlbearbeitungsgerät nach Anspruch 1, welches ein Gehäuse (609) zum Abdecken des Unterbrecherdrehspiegels (601) und eine Antriebseinrichtung (604) für den Unterbrecherdrehspiegel (721) und weiterhin ein Gebläse (615), um Luft durch ein an einem Teil des Gehäuses (609) angebrachtes Filterelement (616) zu blasen, aufweist.

4. Laserstrahlbearbeitungsgerät nach Anspruch 1, wobei der Unterbrecherdrehspiegel (721) Luftblasöffnungen (724) um dessen Achse (726) herum aufweist und wobei an der Fläche des Unterbrecherdrehspiegels (721), die der einen den Lichtstrahl (110) in hohem Maße reflektierenden Überzug (723) aufweisenden Oberfläche gegenüberliegt, Filtereinrichtungen (724) vorgesehen sind.

5. Laserstrahlbearbeitungsgerät nach Anspruch 1, welches ein Paar Flansche (803, 804), die mit einem bestimmten Zwischenraum dazwischen zum Halten des Unterbrecherdrehspiegels (802) dazwischen an einer Drehwelle (801) angebracht sind, und eine zwischen einem der Flansche (803) und dem Unterbrecherdrehspiegel (802) angebrachte Dämpfungseinrichtung (808) und Anbindeeinrichtungen (810) zum Anbinden der Flansche (803, 804), um den Zwischenraum zu verengen und dadurch den Unterbrecherdrehspiegel (802) fest zwischen den Flanschen zu befestigen, aufweist.

6. Laserstrahlbearbeitungsgerät mit
— einem Laseroszillator (301) zum Erzeugen eines Lichtstrahls (309),
— einem Strahlverteiler (308), der wenigstens einen ganz reflektierenden Spiegel (314, 337) und einen Strahlaufsplitterer (312, 338) aufweist, welche so angeordnet ist, daß er alternativ in die Bahn des Lichtstrahls (309) eingesetzt werden kann, um den Lichtstrahl (309) in a vorgegebenen Abfolge in die gewünschten Richtungen zu verteilen,
— einer Vielzahl von Unterbrecherdrehspiegeln (302, 305) um den vom dem Strahlverteiler (308) abgegebenen Lichtstrahl (309) zu teilen,
— Antriebsvorrichtungen (304, 307) zum Drehen der Unterbrecherdrehspiegel (302, 305),
— je einem an jedem der Unterbrecherdrehspiegel (302, 305) vorgesehenen Drehfühler (303, 306) zum Abtasten der Winkelstellung von Spiegelteilen (127) und Öffnungsteilen (126) der Unterbrecherdrehspiegel (302, 305) zum Erzeugen eines Oszillationssteuersignals,
— wenigstens einem normalen Spiegel zum Reflektieren eines durch die Unterbrecherdrehspiegel hindurchgegangenen Lichtstrahls auf ein Werkstück, und
— einer Steuereinrichtung (316) zum Steuern von Phase und Frequenz vom Starten und Anhalten der Oszillation des Laseroszillators (301) (Fig. 6+7).

7. Laserstrahlbearbeitungsgerät nach Anspruch 6, wobei der Unterbrecherdrehspiegel ein Substrat (403) aufweist, das bezüglich des Lichtstrahls (309) durchlässig ist und einen den Lichtstrahl (309) an bestimmten Stellen in hohem Maße reflektierenden Überzug (402) aufweist.

8. Laserstrahlbearbeitungsgerät nach Anspruch 6, welches ein Gehäuse (609) zum Abdecken des Unterbrecherdrehspiegels und eine Antriebseinrichtung (604) für den Unterbrecherdrehspiegel (601) und weiterhin ein Gebläse (615), um Luft durch ein an einem Teil des Gehäuses (609) angebrachtes Filterelement (616) zu blasen, aufweist.

9. Laserstrahlbearbeitungsgerät nach Anspruch 6, wobei der Unterbrecherdrehspiegel (721) Luftblasöffnungen (724) um dessen Achse (726) herum aufweist und wobei an der Fläche des Unterbrecherdrehspiegels (721), die der einen den Lichtstrahl (110) in hohem Maße reflektierenden Überzug (723) aufweisenden Oberfläche gegenüberliegt, Filtereinrichtungen (724) vorgesehen sind.

10. Laserstrahlbearbeitungsgerät nach Anspruch 6, welches ein Paar Flansche (803, 804), die mit einem bestimmten Zwischenraum dazwischen zum Halten des Unterbrecherdrehspiegels (802) dazwischen an einer Drehwelle (801) angebracht sind, und eine zwischen einem der Flansche (803) und dem Unterbrecherdrehspiegel (802) angebrachte Dämpfungseinrichtung (808) und Anbindeeinrichtungen (810) zum Anbinden der Flansche (803, 804), um den Zwischenraum zu verengen und dadurch den Unterbrecherdrehspiegel (802) fest zwischen den Flanschen zu befestigen, aufweist.

11. Laserstrahlbearbeitungsgerät mit
— einem Laseroszillator (509) zum Erzeugen eines Lichtstrahls (510),
— einem Unterbrecherdrehspiegel (511) mit einer Vielzahl von reflektierenden Spiegeln (513), die um eine Drehwelle angeordnet sind, wobei ihre optischen Normlinien unterschiedliche Winkel zu der Achse der Drehwelle haben,
— einer Antriebsvorrichtung (512) zum Drehen des Unterbrecherdrehspiegels (511),
— normalen Spiegeln (517, 518, 519, 520, 521 und 522) zum Reflektieren von Lichtstrahlen (514, 515, 516), die von dem Unterbrecherdrehspiegel (511) auf das entsprechenden Werkstücke reflektiert wurden,
— einem Drehfühler (529) zum Abtasten der Winkelstellungen der reflektierenden Spiegel (513) zum Erzeugen eines Oszillationssteuersignals,
— einer Steuereinrichtung (531) zum Steuern von Phase und Frequenz vom Starten und Anhalten des Laseroszillators (509) (Fig. 11+12).

12. Laserstrahlbearbeitungsgerät nach Anspruch 11, welches ein Gehäuse (609) zum Abdecken des Unterbrecherdrehspiegels (601) und eine Antriebseinrichtung (604) für den Unterbrecherdrehspiegel (601) und weiterhin ein Gebläse (615), um Luft durch ein an einem Teil des Gehäuses (609) angebrachtes Filterelement (616) zu blasen, aufweist.

13. Laserstrahlbearbeitungsgerät nach Anspruch 11, wobei der Unterbrecherdrehspiegel (721) Luftblasöffnungen (724) um dessen Achse (726) herum aufweist und wobei an der Fläche des Unterbrecherdrehspiegels (721), die der einen den Lichtstrahl (110) in hohem Maße reflektierenden Überzug (723) aufweisenden Oberfläche gegenüberliegt, Filtereinrichtungen (724) vorgesehen sind.

14. Laserstrahlbearbeitungsgerät nach Anspruch 11, welches ein Paar Flansche (803, 804), die mit einem bestimmten Zwischenraum dazwischen zum Halten des Unterbrecherdrehspiegels (802) dazwischen an einer Drehwelle (801) angebracht sind, und eine zwischen einem der Flansche (803, 804) und dem Unterbrecherdrehspiegel (802) angebrachte Dämpfungseinrichtung (808) und Anbindeeinrichtungen (810) zum Anbinden der Flansche (803, 804), um den Zwischenraum zu verengen und dadurch den Unterbrecherdrehspiegel (802) fest zwischen den Flanschen zu befestigen, aufweist.

15. Laserstrahlbearbeitungsgerät nach Anspruch 11, wobei entsprechende reflektierende Spiegel (513) konkave Oberflächen haben.

**Revendications**

1. Appareil de traitement à rayon laser comprenant:

— un oscillateur laser (109) pour produire un faisceau de lumière (110),

— de multiples miroirs diviseurs tournants (114, 115) disposés dans un chemin dudit faisceau lumineux (110),

— des moyens d'entraînement (111, 112) pour faire tourner lesdits miroirs diviseurs tournants (114, 115),

— au moins un miroir ordinaire (122) pour réfléchir le faisceau de lumière ayant traversé lesdits miroirs diviseurs tournants pour un poste de travail,

— un capteur de rotation (116, 117) prévu sur chacun desdits miroirs diviseurs tournants (114, 115) pour détecter le passage des parties réfléchissantes (127) et des parties ouvertures (126) desdits miroirs diviseurs tournants (114, 115) pour produire un signal de commande d'oscillation,

— un moyen de définition des conditions de traitement (128) pour établir une largeur d'impulsion et un niveau d'une valeur de crête dudit faisceau laser correspondant aux conditions de traitement,

— un contrôleur d'oscillation (129) pour produire des signaux d'impulsion basés sur les données desdits moyens de définition des conditions de traitement (128) et dudit signal de commande d'oscillation desdits capteurs de rotation (114, 115),

— un multiplexeur (130) pour mélanger des impulsions de sortie desdites commandes d'oscillation (129) et pour sortir des impulsions de commande vers un moyen de commande d'oscillation (131) et,

— un moyen de commande d'oscillation (131) pour commander la phase et la fréquence de l'oscillation et arrêter ledit oscillateur laser (109).

2. Appareil de traitement à faisceau laser selon la revendication 1 dans lequel lesdits miroirs diviseurs comprennent un substrat (403) qui est transparent (401) audit faisceau lumineux et comporte un revêtement (402) de haute réflectivité audit faisceau lumineux (110) en des parties sélectionnées de celui-ci.

3. Appareil de traitement à faisceau laser en conformité avec la revendication 1, comprenant un logement (609) pour contenir ledit miroir diviseur tournant (601) et le moyen d'entraînement (604) dudit miroir diviseur tournant (721) et en plus comprenant un moyen de ventilation (605) pour souffler de l'air à travers un élément de filtre (616) faisant partie dudit logement (609).

4. Appareil de traitement à faisceau laser selon la revendication 1, dans lequel ledit miroir diviseur tournant (721) comporte des trous de soufflage d'air (724) autour de son axe (726) et sur lesquels le moyen de filtre (725) est placé contre la face dudit miroir diviseur tournant (721) opposée à la face comportant un revêtement (723) d'une haute réflectivité audit faisceau lumineux (110).

5. Appareil de traitement à faisceau laser selon la revendication 1 comprenant une paire de brides (803, 804) fixée sur un arbre tournant (801) avec un espace prédéterminé entre eux pour maintenir ledit miroir diviseur tournant (802) entre celles-ci et un moyen élastique (808) inséré entre une desdites brides (803) et ledit miroir diviseur tournant (802) et un moyen de serrage (810) pour serrer lesdites brides (803, 804) pour diminuer ledit espace et ainsi serrer de manière fixe ledit miroir tournant à division (802) entre lesdites brides.

6. Appareil de traitement à faisceau laser comprenant:

— un oscillateur laser (301) pour produire un faisceau lumineux (309),

— un distributeur de faisceau (308) comportant au moins un miroir à réflexion totale (314, 337) et un séparateur de faisceau (312, 338) disposé de manière à être mis alternativement sur le chemin dudit faisceau lumineux pour distribuer de ce fait ledit faisceau lumineux (309) dans les directions désirées dans une séquence prédéterminée,

— de multiples miroirs diviseurs tournants (302, 305) pour diviser ledit faisceau lumineux (309) obtenu depuis ledit distributeur de faisceaux (308),

— un moyen d'entraînement (304, 307) pour faire tourner lesdits miroirs diviseurs tournants (302, 305),

— un capteur de rotation (303, 306) prévu sur chacun desdits miroirs diviseurs tournants (302, 305) pour détecter le passage des parties réfléchissantes (127) et des parties ouverture (126) desdits miroirs diviseurs tournants (302, 305) pour produire un signal de commande d'oscillation,

— au moins un miroir ordinaire pour réfléchir vers un poste de travail le faisceau lumineux ayant traversé lesdits miroirs diviseurs tournants et,

— un moyen de commande (316) pour commander la phase et la fréquence du début et de la fin d'oscillation dudit oscillateur à laser (301) (Figures 6+7).

7. Appareil de traitement à faisceau laser selon la revendication 6, dans lequel ledit miroir diviseur tournant comprend un substrat (403) qui est transparent audit faisceau lumineux (309) et qui comporte un revêtement (202) de haute réflectivité audit faisceau (309) en des parties sélectionnées de celui-ci.

8. Appareil de traitement à faisceaux laser selon la revendication 6 comprenant un logement (609) pour contenir ledit miroir diviseur tournant et un moyen d'entraînement (604) dudit miroir diviseur tournant (601) et en outre comprenant un moyen de ventilation (615) pour souffler de l'air à travers un élément de filtre (616) faisant partie dudit logement (609).

9. Appareil de traitement à faisceau laser selon la revendication 6, dans lequel ledit miroir diviseur tournant (721) comporte des trous de soufflage d'air (724) autour de son axe (726) et sur lesquels le moyen de filtre (725) est placé contre la face dudit miroir diviseur tournant (721) opposée à la face comportant un revêtement (723) d'une haute réflectivité audit faisceau lumineux.

10. Appareil de traitement à faisceau laser selon la revendication 6, comprenant une paire de brides (803, 804) fixée sur un arbre tournant (801) avec un espace prédéterminé entre eux pour maintenir ledit miroir diviseur tournant (802) entre celles-ci et un moyen élastique (808) inséré entre une desdites brides (803, 804) et ledit miroir diviseur tournant (802) et un moyen de serrage (810) pour serrer lesdites brides (803, 804) pour diminuer ledit espace et ainsi serrer de manière fixe ledit miroir diviseur tournant (802) entre lesdites brides (803, 804).

11. Appareil de traitement à faisceau laser comprenant:

— un oscillateur laser pour produire un faisceau lumineux (510),

— un miroir diviseur tournant (511) comportant une pluralité de miroirs de réflexion (513) disposée autour d'un arbre de rotation avec leurs lignes perpendiculaires optiques orientées suivant différents angles vers l'axe dudit axe de rotation,

— un moyen d'entraînement (512) pour faire tourner ledit miroir diviseur tournant (511) des miroirs ordinaires (517, 518, 519, 520, 521 et 522) servant à réfléchir des faisceaux lumineux (514, 515, 516) réfléchis par ledit miroir diviseur tournant (511) pour les postes de travail respectifs,

— un capteur de rotation (529) pour détecter le passage desdits miroirs de réflexion (513), pour produire un signal de commande d'oscillation et,

— un moyen de commande (531) pour commander la phase et la fréquence de début et d'arrêt d'oscillation dudit oscillateur laser (509) (Figures 11+12).

12. Appareil de traitement à faisceau laser selon la revendication 11 comprenant un logement (609) pour contenir ledit miroir diviseur tournant (601) et un moyen d'entraînement (604) dudit miroir diviseur tournant (601) et en outre comprenant un moyen de ventilation (615) pour souffler de l'air à travers un élément de filtre (616) faisant partie dudit logement (609).

13. Appareil de traitement à faisceaux laser selon la revendication 11, dans lequel ledit miroir diviseur tournant (721) comporte des trous de soufflage d'air (724) autour de son axe (726), et sur lequel le moyen de filtre (725) est placé contre la face dudit miroir diviseur tournant (721) opposée à la face comportant un revêtement (402) d'une haute réflectivité audit faisceau lumineux.

14. Appareil de traitement à faisceau laser selon la revendication 11, comprenant une paire de brides (803, 804) fixée sur un arbre tournant (801) avec un espace prédéterminé entre eux pour maintenir ledit miroir diviseur tournant (802) entre celles-ci et un moyen élastique (808) inséré entre une desdites brides (803, 804) et ledit miroir diviseur tournant (802) et un moyen de serrage (810) pour serrer lesdites brides (803, 804) pour diminuer ledit espace et ainsi serrer de manière fixe ledit miroir diviseur tournant (802) entre lesdites brides.

15. Appareil de traitement à faisceaux laser selon la revendication 11 dans lequel les miroirs à réflexion respective (513) ont des surfaces concaves.

# FIG.1 (Prior Art)

FIG.2 (a)

FIG.2 (b)

F I G. 3

(1)

(2)

(3)

(4)

(5)

(6)

(7)

## FIG.4(a)

130 | Multi Plexer

129 | Oscillation controller
129 | Oscillation controller
129 | Oscillation controller

128 | Processing condition setting part
128 | Processing condition setting part
128 | Processing condition setting part

113 | Revolution controller

131 | Laser oscillation control apparatus

109 | Laser oscillator

116

117

111

112

110

114

115

122

110-a

110-b

110-c

Work 123

Work 124

Work 125

## FIG.4(b)

P

$\frac{2}{3}$P

$\frac{1}{3}$P

126

127

114,115

## FIG.4(c)

116,117

118

119

114,115

# F I G. 5

(1)

(2)

(3)

(4)

(5)

(6)

(7)

(8)

(9)

(10)

(11)

(12)

(13)

(14)

(15)

(16)

FIG.6

FIG.7

FIG.7-A          FIG.7-B          FIG.7-C

FIG.8(a)

FIG.8(b)

FIG.9

FIG.10

FIG.11

# FIG,12 (a)

# FIG,12 (b)

530
12B
513-A
527
0
530
513-C
530
12B
513-B
513-B

526-A
530
511
513-A
α
β
527
528
513-B
526-B
530

F I G .13

FIG.14 (a)

FIG.14 (b)

FIG.15(a)    FIG.15(b)

FIG.16(a)    FIG.16(b)